# EUROPEAN PATENT APPLICATION

(11) **EP 4 473 886 A1**
(43) Date of publication of application: **11.12.2024**
(21) Application number: 24179949.3
(22) Date of filing: 04.06.2024
(51) Int. Cl.: A47K 13/30, E03D 9/08

(54) **HEATING DEVICES**

(30) Priority: 05.06.2023 US 202363471119 P; 15.11.2023 US 202363599326 P; 19.02.2024 US 202463555265 P; 31.05.2024 US 202418680488
(71) Applicant: Kohler Co., Kohler, WI 53044 (US)
(72) Inventor: Lobner, Dustin, Kohler, WI 53044 (US); Kwacz, Jason, Kohler, WI 53044 (US); Schibur, Mark, Kohler, WI 53044 (US); Lampen, Lowell, Kohler, WI 53044 (US); Laundre, Jeffrey T., Kohler, WI 53044 (US)
(74) Representative: Barker Brettell LLP

(57) **Abstract**

In one example, a toilet seat assembly includes a toilet seat, a thin film heater adhered to a top surface of the toilet seat, and a coating of injected molded material on a surface of the thin film heater. In another example, a toilet seat assembly includes a toilet seat frame, and an electrically conductive polymer heater supported by the toilet seat frame, wherein the electrically conductive polymer heater includes carbon fiber and polypropylene.

## Description

### CROSS REFERENCE TO RELATED APPLICATIONS

This application claims priority to Patent Application No. 18/680,488 filed May 31, 2024, Provisional Application No. 63/555,265 filed February 19, 2024, Provisional Application No. 63/599,326 filed November 15, 2023, and Provisional Application No. 63/471,119 filed June 5, 2023, which are hereby incorporated by reference in their entirety.

### FIELD

The present application relates to heating devices for kitchen and bathroom devices and appliances.

### BACKGROUND

The following embodiments describe heating technologies useful in kitchen and bathroom devices and appliances. Joule heating (also known as resistive heating or ohmic heating) is heat that is generated by passing electricity through an electrical conductor. Typical examples in the home include toasters, electric powered stoves and ovens, and hair driers.

The following embodiments include heated toilet seats and heated bidet seats. For these devices, the seat is hollow and has a heating element secured inside the seat. Other examples include "instant hot" shower heads and faucets, shower stall floors, bathtubs, towel racks, shower doors, and mirrors.

As described above, current toilet/bidet seats utilize a conductive wire that is shaped along the inside of the seat. This heater runs on alternating current and creates approximately 40W of heat. This heat must be conducted through the seat body, making the warm-up time approximately 5 minutes. Because of this delay, the seat remains on while not in use so that the customer experiences heat from the moment they sit down. This consumes approximately 400 W-Hr/day of power depending on the specific product.

### BRIEF DESCRIPTION OF THE DRAWINGS

Exemplary embodiments are described herein with reference to the following drawings, according to an exemplary embodiment.
Figure 1 illustrates an example toilet including one or more heating devices described herein.
Figure 2 illustrates an example toilet seat including one or more heating devices described herein.
Figure 3A illustrates an example surface heater for a toilet seat.
Figure 3B illustrates an example manufacturing process for the toilet seat of FIG. 3A.
Figure 4 illustrates an example toilet seat including one or more heating devices described herein.
Figure 5A illustrates an example thin film on the surface of a toilet seat.
Figure 5B illustrates an example temperature profile for the embodiment of Figure 5A.
Figure 6A illustrates an example thin film on the surface of a toilet seat with a skin coat.
Figure 6B illustrates an example temperature profile for the embodiment of Figure 6A.
Figure 7A illustrates an example thin film under the structure of a toilet seat.
Figure 7B illustrates an example temperature profile for the embodiment of Figure 7A.
Figure 8A illustrates an example thin film under the structure of a toilet seat with a modified thermal coefficient.
Figure 8B illustrates an example temperature profile for the embodiment of Figure 8A.
Figure 9A illustrates an example conductive polymer with a surface coat.
Figure 9B illustrates an example temperature profile for the embodiment of Figure 9A.
Figure 10A illustrates an example thin film heater adhered to a thermally conductive structure.
Figure 10B illustrates an example temperature profile for the embodiment of Figure 10A.
Figure 11 illustrates an example flowchart for manufacturing an example toilet seat.
Figure 12A illustrates an example base for the toilet seat.
Figure 12B illustrates an injection molded toilet seat.
Figure 13A and 13B illustrates injection molding techniques.
Figure 14 illustrates an example controller for any of the disclosed embodiments.
Figure 15 illustrates another example flowchart for manufacturing an example toilet seat.

### DETAILED DESCRIPTION

The following embodiments includes methods, apparatus, and system to heating devices for a toilet seat. The following additional heating technologies may be employed in toilet/bidet seats, as well as in other devices such as shower heads and faucets, shower stall floors, bathtubs, towel racks, shower doors, and mirrors.

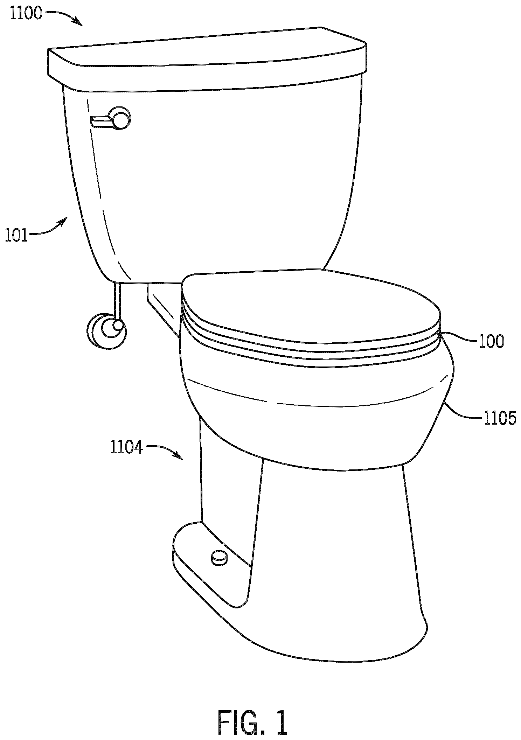

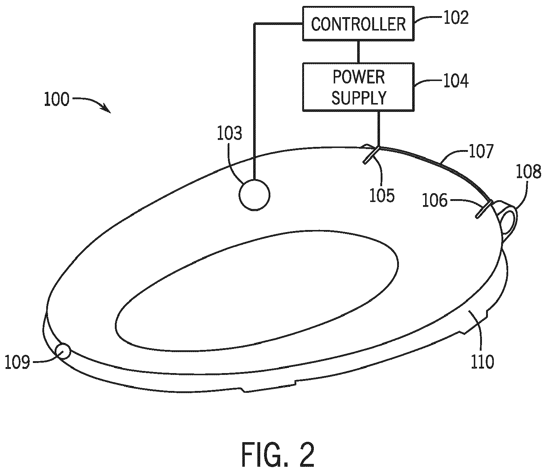

FIG. 1 illustrates an example toilet (plumbing device) for use with a toilet seat 100 with a conductive coating or conductive filler. FIG. 2 illustrates the toilet seat 100. The toilet 1100 may include a tank (e.g., container, reservoir, etc.), shown as a tank 101, and a pedestal (e.g., base, stand, support, etc.), shown as a pedestal 1104. The tank 101 may be coupled to, and supported by, the pedestal 1104, which may be positioned on a floor. In some embodiments, the tank 101 and the pedestal 1104 may be formed together as a single component. In some other examples, the tank 101 may be mounted nearby on a wall, or within a wall. The tank 101 is configured to receive water (e.g., via a fill valve of the toilet 1100, etc.) and store the water in between flushes. The pedestal 1104 includes a bowl 1105 and may be configured to receive the water from the tank 101 to flush contents of bowl into a sewage line. In some embodiments, the pedestal 1104 may be mounted on the wall of a lavatory and the bowl may be configured to receive water from a fluid supply source such as a household water supply. The bowl 1105 of the pedestal 1104 includes a sump (e.g. a receptacle) and an outlet opening, wherein water and waste is collected in the sump until being removed through the outlet opening, such as when the contents of the bowl are flushed into a sewage line. The toilet 1100 further includes a trapway, and the trapway may be fluidly connected to the bowl via the sump. The trapway fluidly connects the sump to the outlet opening.

Examples of the toilet seat 100 may include conductive plastics for with injected molding as described herein. The plastics include fillers that are conductive and connected to a power source. When current is applied, the toilet seat 100 is heated. Because of the fillers, the material itself is conductive and forms the heating element.

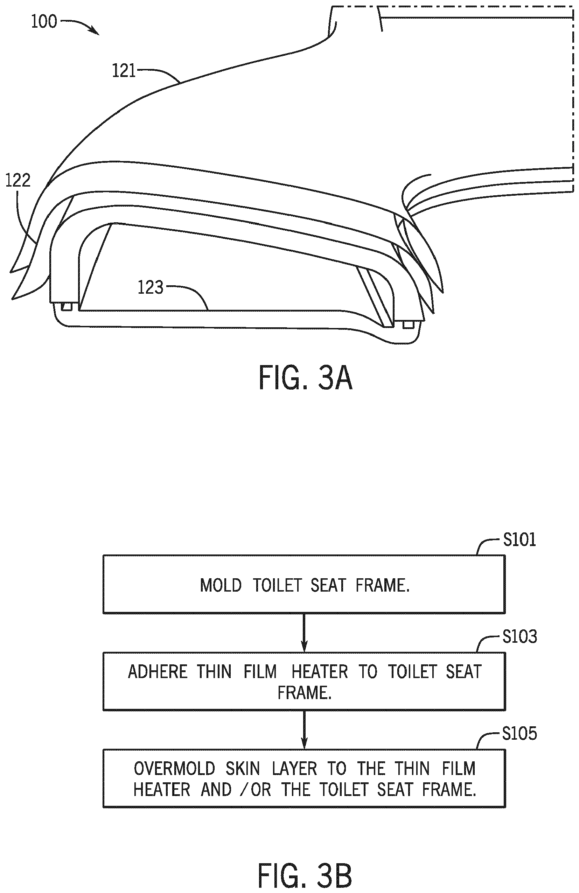

Figure 2 illustrates an example toilet seat 100 including one or more heating devices described herein. Figure 3 illustrates an example surface heater for the toilet seat 100 of Figure 2. The toilet seat 100 may include a housing 110, electrical terminals (e.g., first terminal 105 and second terminal 106) connected by an electrical connection or wire 107 to a power supply 104, which operated under commands from controller 102. The controller 102 may receive data or feedback from a sensor 103. The housing 110 may connect to the toilet via a hinge 108. Additional, different, or fewer components may be included.

The controller 102 may apply a target temperature when supplying commands to the power supply 104. In some examples, the controller 102 uses a pulse width modulated (PWM) signal, indicative of a duty cycle, to instruct the power supply to provide power to the electrical terminals. The controller 102 may include a matrix or a relationship (e.g., factor) that relates a particular target temperature to a particular PWM signal.

In other examples, the PWM signal from the controller 102 is adjusted dynamically through feedback. The temperature sensor 103 is configured to detect a temperature of the toilet seat and provide the temperature to the controller 102. The duty cycle or PWM signal for the power supply 104 is selected according to the detected temperature. The controller 102 is configured to compare the detected temperature to the target temperature and the duty cycle is selected in response to the comparison. When the detected temperature exceeds the target temperatures, the controller 102 shortens the pulse width of the PWM signal or lowers the duty cycle. When the detected temperature is less than the target temperatures, the controller 102 increases the pulse width of the PWM signal or raises the duty cycle.

Alternative to PWM control, the controller 102 may instruct a transformer circuit to provide different levels of DC output according to the target temperature. The transformer circuit may include a transfer configured to convert AC utility electrical signals to a DC output. The transformer circuit may include one or more circuit elements (e.g., multicoil transformer, DC-DC converters, voltage dividers, etc.) to select different DC levels (e.g., a low DC level for low temperatures, a medium DC level for medium temperatures, and a high DC level for high temperatures). The transformer circuit and or transformer may be mounted inside the toilet seat housing or another location supported by the toilet.

A variety of techniques may be used to select the target temperature. In some examples, the user provides input to the controller 102. The user may select the target temperature using a user input device such as a button, switch, touchscreen, or other selector. Example target temperatures may be specific temperatures (e.g., 86 degrees Fahrenheit, 30 degrees Celsius) or generalized temperature ranges (e.g., low temperature, medium temperature, or high temperature). In other examples, the target temperature may be selected wirelessly such as by remote control or using a mobile device (e.g., mobile device, tablet). Examples of wireless communication include the family of protocols known as Bluetooth. Other examples of wireless communication include radio frequency identification (RFID) or near field communication (NFC). These short range communication signals may be received when a mobile device passes near the receiver.

The controller 102 may send commands to an indicator 109 that indicates whether the heating element is turned on and/or whether the toilet seat 100 is hot. The indicator 109 may be illuminated in response to the sensor 103. The indicator 109 may be illuminated in response to the commands for the power supply 104 from the controller 102. The indicator 109 may include a light emitting diode. In one example, the indicator 109 provides multiple colors (e.g., blue represents a cool seat, purple represents a heating seat, and red indicates a seat at the target temperature).

The controller 102 may be turned on, or initiate control of the heating element though the power source 104 based on an occupancy sensor. The occupancy sensor configured to detect a presence of a user, wherein the controller connects the power source and the first terminal and the second terminal in response to the presence of the user.

One example occupancy sensor is an image sensor. The image sensor may be an image collection device with a lens such as a digital aperture collection device (e.g., camera) or an image collection device with a charge coupled device (CCD) such as an integrated circuit formed on a silicon surface forming light sensitive elements.

Another example occupancy sensor is a proximity sensor. The proximity sensor may be employed to detect the presence of a user within a zone of detection near the toilet. Electric potential sensors, projected capacitance sensors, light detection and ranging (LiDAR), and infrared sensors (e.g., projected infrared sensors, passive infrared sensors) are non-limiting examples of proximity sensors that may be employed with the systems of this disclosure. Motion sensors may be employed to detect motion (e.g., a change in position of an object relative to the object's surroundings). Electric potential sensors, optic sensors, radio-frequency (RF) sensors, sound sensors, magnetic sensors (e.g., magnetometers), vibration sensors, and infrared sensors (e.g., projected infrared sensors, passive infrared sensors) are non-limiting examples of motion sensors that may be employed with the systems of this application. In another example, the sensor may include a time of flight (ToF) or a LiDAR that serves as a proximity sensor.

Another example occupancy sensor is a pressure sensor or a capacitance sensor associated with the toilet seat. The capacitance sensor may be responsive to touch on the toilet seat. The pressure or weight sensor may be responsive to the weight from the user sitting on the toilet seat.

The power supply 104 provides a current through the first terminal 105, which travels through the heating element to the second terminal 106. The heating element, at least in part, acts as a resistor. Heat is generated by the heating element as current flows through the heating element, and the heat is transferred to the toilet seat. Several example heating elements and toilet seat constructions are provided in the following embodiments.

As shown by Figure 3A, the toilet seat 100 may include a heater film 122 and a skin device 121. The toilet seat 100 may include a toilet seat frame 123. Examples of the toilet seat 100 may include conductive materials as described herein in coatings that are connected to a power source. When current is applied, the toilet seat 100 is heated. Additional, different, or fewer components may be included.

The toilet seat frame 123 may be formed from a mold. The toilet seat frame 123 may be formed a rubberlike resin, thermoplastic elastomer (TPE) or other similar material. The toilet seat frame 123 may be hollow. The toilet seat frame 123 is configured to support a user with a predetermined amount of deformation. The toilet seat frame 123 supports the heater film 122 and the skin device 121.

The heater film 122 may be applied (e.g., mounted on, adhered to) the toilet seat frame 123 using an adhesive. The adhesive may be a liquid or an adhesive layer (e.g., adhesive film). The heater film 122 may have a thickness in inches in a range from 0.01 to 0.04 or another range such as from 0.001 to 0.1 inches.

The skin device 121 is a coating of injected molded material on a surface of the thin film heater 122. The skin device 121 may be overmolded over the thin film heater 122. For example, the toilet seat frame 123 is molded in a first molding process, and subsequently, the skin device 121 is molded over the toilet seat frame 123 and the heater film 122 in a second molding process (e.g., overmolding). The skin device 121 may have a thickness in inches in a range from 0.030 to 0.075 (0.08 to 0.20 centimeters) or another range such as 0.01 to 0.1 inches (0.025 to 0.25 centimeters).

Figure 3B illustrates an example manufacturing process for the toilet seat 100 of Figure 3A. Additional, different or fewer acts may be included.

At act S101, the toilet seat frame 123 is molded. Various techniques may be used. In one example, the toilet seat frame 123 is injected molded by melted resin or plastic at a certain temperature until it is liquid or substantially deformable. The melted plastic or resin take the shape of the mold (e.g., first mold) of the toilet seat frame 123.

At act S103, the thin film heater 122 is adhered to the toilet seat frame 123. The thin film heater 122 may be glued to the toilet seat frame 123 with adhesive. Other fusing techniques are possible.

At act S105, the skin device 121 (e.g., overmolding layer) is overmolding on the toilet seat frame 123 and/or the thin film heater 122. The skin device 121 may be case onto the toilet seat frame 123 and the thin film heater 122. The toilet seat frame 123 included the adhered thin film heater 122 may be placed in an oversized mold (e.g., second mold). The oversize mold is larger than the toilet seat frame 123 and the thin film heater 122. The excess cavity is filled with material to form the skin device 121.

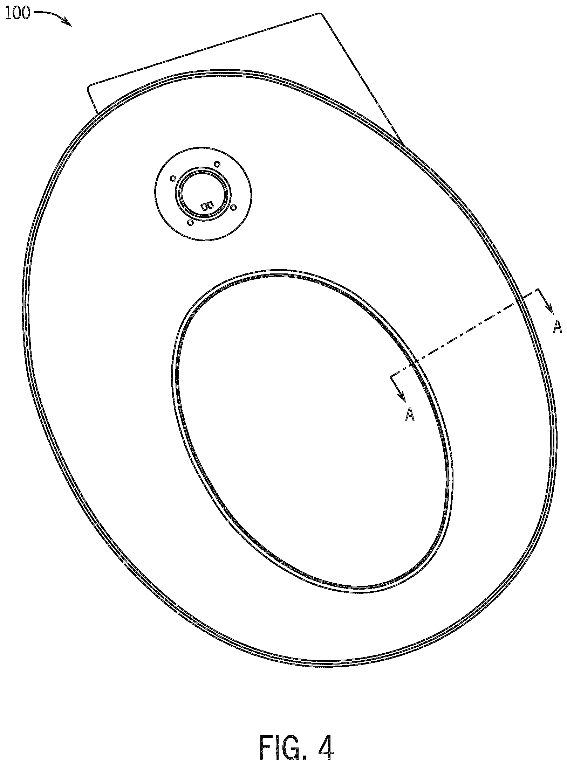

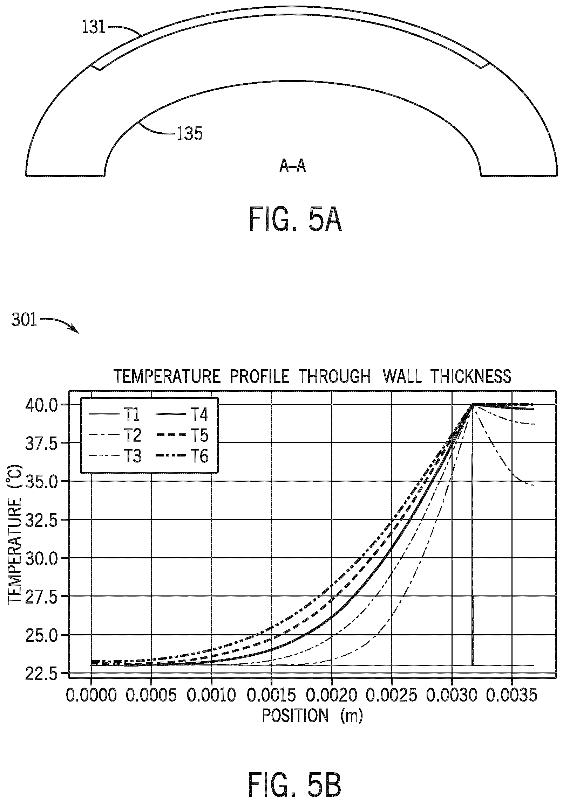

For the following embodiments, Figure 4 illustrates an example toilet seat 100 having cross section A-A as represented in the embodiments of Figures 5-10. Each of the following embodiments are capable of reaching a target temperature in approximately 5 seconds. All of these techniques may include that the user is shielded from the electrical current. This means they may include a clear coating or gloss white coating to provide the traditional appearance of a toilet seat along with proper safety for the end user.

Figure 5A illustrates an example thin film heater 131 on the surface of a toilet seat frame 135. Examples for the thin film heater 131 include a non-woven wire heater, a polyimide film with polymer, or polyethylene or polyethylene terephthalate (PET) film with polymer heater.

Figure 5B illustrates an example temperature profile for the embodiment of Figure 5A. This graph shows the predicted temperature profile through the seat profile over time (displayed per second) in the example in which the heater is placed directly on the surface of the seat, conducting the heat through the heater film only.

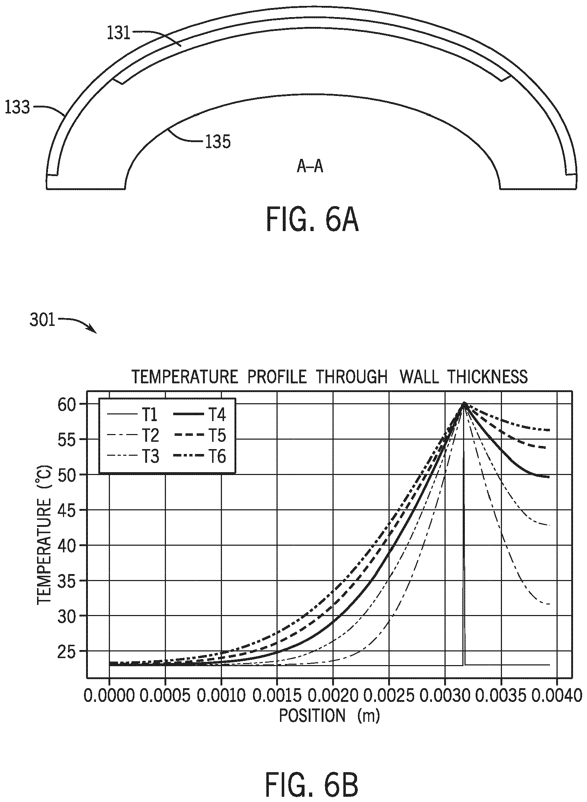

Figure 6A illustrates an example thin film 131 on the surface of a toilet seat frame 135 with a skin coat 133. The skin coat 133 may be overmolded on both the thin film 131 and the toilet seat frame 135.

Examples for the thin film 131 include conductive coatings and conductive films. Conductive coatings (examples: epoxy, acrylic, or other base) may have conductive fillers dispersed in them. These fillers can be metallic (examples: copper, silver, silver-plated copper, or nickel), fibers (examples: silver nano-wires, carbon fiber), or other more materials (examples: carbon nano-tubes, graphene, or graphene oxide). The fillers are present in significant quantities that they form a network that is able to conduct electricity.

Some of these coatings (the metallic based coatings in particular) may be used for electrostatic discharge protection of non-conductive surfaces, but are also effective for use as a heater. The conductive coating based on metallic and fiber components may be applied to toilet/bidet seats, as well as in other devices such as shower heads and faucets, shower stall floors, bathtubs, towel racks, shower doors, and mirrors to form a heating element.

The carbon nano-tube based coating may be applied as a heater in toilet/bidet seats, as well as in other devices such as shower heads and faucets, shower stall floors, bathtubs, towel racks, shower doors, and mirrors. For example, the surface of the toilet seat may include carbon nano-tubes.

Conductive coatings have the benefit of only heating the surface that need to be heated, so a rapid heating application is possible. The coatings may require high volumes of filler to form the conductive network. Uniform application for consistent performance is also achieved.

Conductive films may act as a carrier for a conductive material. The conductive material can be conductive coatings described previously or others. This overcomes some of the mechanical challenges of conductive coatings by providing a support structure. Countering this is that the film needs to be formed to the product, adding another manufacturing process that typically requires tooling. One example heater includes both silver nano-wires and carbon nano-tubes as conductive layers.

Figure 6B illustrates an example temperature profile for the embodiment of Figure 6A. This graph shows the predicted temperature profile through the seat profile over time (displayed per second) in the example in which the heater is placed directly on the surface of the seat and then overmolded with other material, conducting the heat through the heater film and the overmold.

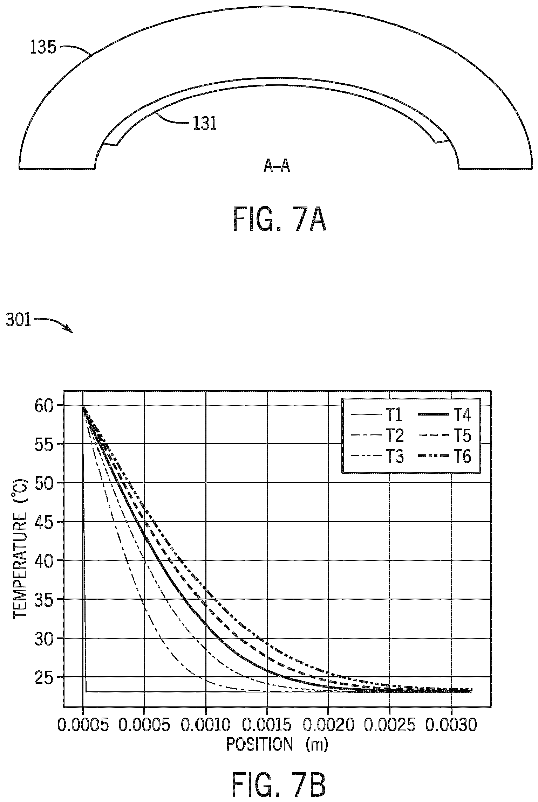

Figure 7A illustrates an example thin film 131 under the structure of a toilet seat frame 135. The toilet seat frame 135 may be formed of a thermally conductive material. Thermal conductive material may include fillers in traditional plastics to allow heat to conduct through it faster. In the case of a heated toilet/bidet seat, this would allow for the same type of heater as is currently used, but the faster conduction of the heat would allow for a faster turn-on time.

The embodiment of Figure 7A may have a low cost of manufacturing because there is only one molding step and it is less difficult than overmolding a heater placed on a seat.

Figure 7B illustrates an example temperature profile for the embodiment of Figure 7A. This graph shows the predicted temperature profile through the seat profile over time (displayed per second) in the example in which the heater is placed directly on the bottom surface of the seat, conducting the heat through the entire top structure of the seat using typical non-modified seat materials.

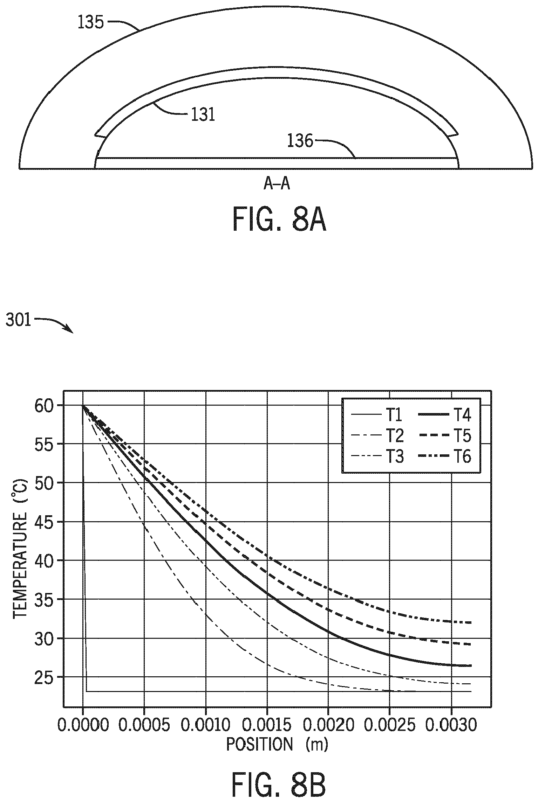

Figure 8A illustrates an example thin film 131 under the structure of a toilet seat frame 135 with a modified coefficient of thermal conductivity. Example materials for the toilet seat frame 135 may include thermoplastic or thermoset materials, or metals. The toilet seat frame 135 may include a base member 136 that shields the thin film 131.

Figure 8B illustrates an example temperature profile for the embodiment of Figure 8A. This graph shows the predicted temperature profile through the seat profile over time (displayed per second) in the example in which the heater is placed directly on the bottom surface of the seat, conducting the heat through the entire top structure of the seat, but using a material modified to increase thermal conductivity.

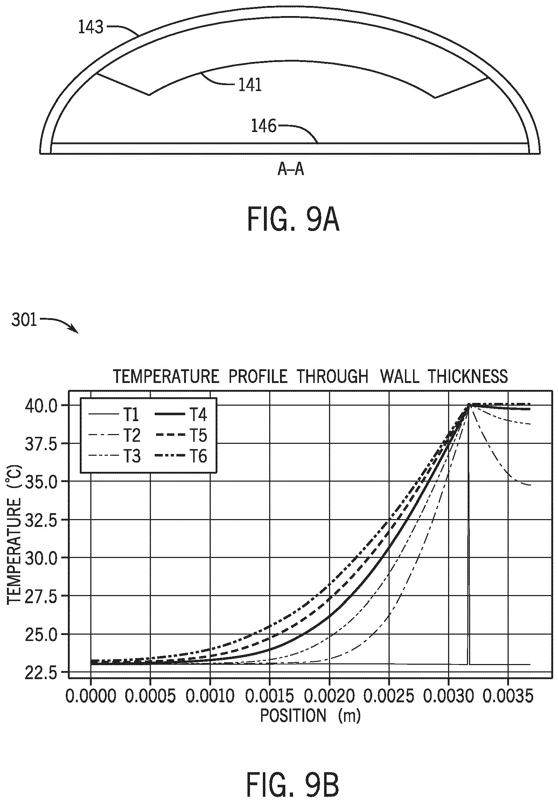

Figure 9A illustrates an example conductive polymer toilet seat body 141 with a surface coat 143. The toilet seat body 141 may include a base member 146 that shields the thin film 131. The toilet seat body 141 may be formed from injection molding conductive plastics. The toilet seat body 141 is an electrically conductive polymer heater supported by the base member 146. The electrically conductive polymer heater may include a carbon material (e.g., graphite, graphite film, carbon fiber) and polypropylene. The concentration of carbon material in the toilet seat body 141 may be up to 30%.

Similar to conductive coatings, conductive fillers can be added to plastics that are then injection molded into shapes. The fillers typically consist of metallic fibers (stainless, silver, and copper), carbon black and carbon fiber, and more exotic materials such as carbon nano-tubes, graphene, and graphene oxide. These materials need to be present in sufficient quantities to form a conductive network that allows the material to conduct electricity. These materials may be used to form heaters in toilet/bidet seats, as well as in other devices such as shower heads and faucets, shower stall floors, bathtubs, towel racks, shower doors, and mirrors.

Figure 9B illustrates an example temperature profile for the embodiment of Figure 9A. This graph shows the predicted temperature profile through the seat profile over time (displayed per second) in the example in which the heater is a primary structural component of the seat, made out of electrically conductive polymer.

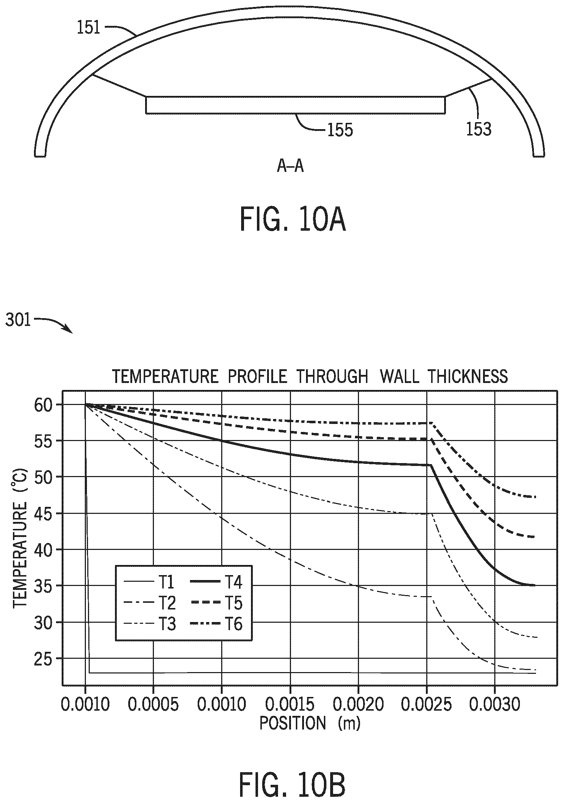

Figure 10A illustrates an example thin film heater 155 adhered to a thermally conductive structure 153 (e.g., toilet seat body) and covered by a surface coat 151. The one or more sensors 103 may be molded into the thermally conductive structure 153. The wire 107 and terminals 105 and 106 may be molded into the thermally conductive structure 153.

Figure 10B illustrates an example temperature profile for the embodiment of Figure 10A. This graph shows the predicted temperature profile through the seat profile over time (displayed per second) in the example in which the heater is placed on a thermally conductive but electrically resistive structure.

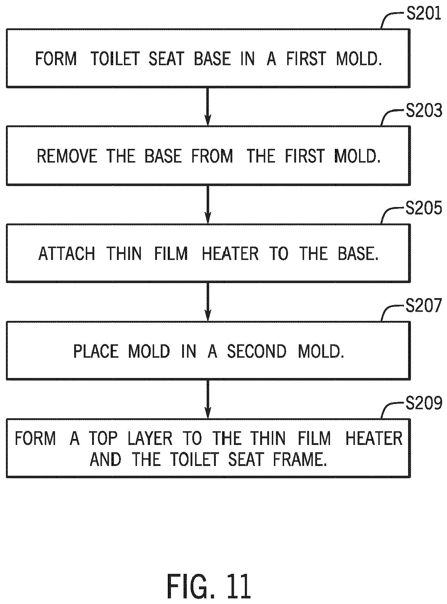

Figure 11 illustrates an example flowchart for manufacturing an example toilet seat. Additional, different, or fewer components may be included.

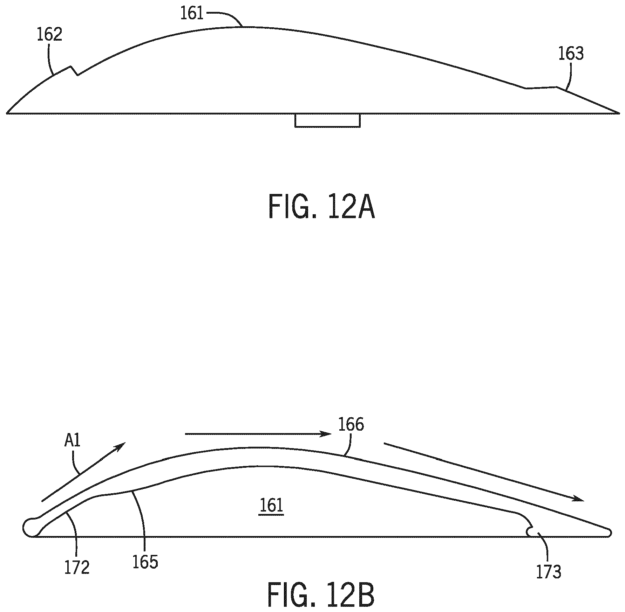

At act S201, a base for the toilet seat is formed in a first mold. FIG. 12A illustrates a cross-section of an example base 161 for the toilet seat. The base 164 may be formed using injection molding in the first mold. The first mold may include a portion corresponding to first lip 162 of the base 161 and a portion corresponding to a second lip 163. The base 161 may be formed of polypropylene having white dye or another color. At act S203, the base is removed from the first mold.

At act S205, a thin film heater 165 is adhered to the base 161. The film heater 165 may include copper. The film heater 165 may be printed on a sheet or film of material. For example, the copper and film may be transported in a roll. The film may be adhered to the base 161 using heat and/or an adhesive. The film may be a thermoformed material (e.g., thermoforming acrylic) such that when the film is subject to heat, the film changes shape to take the shape of the base 161.

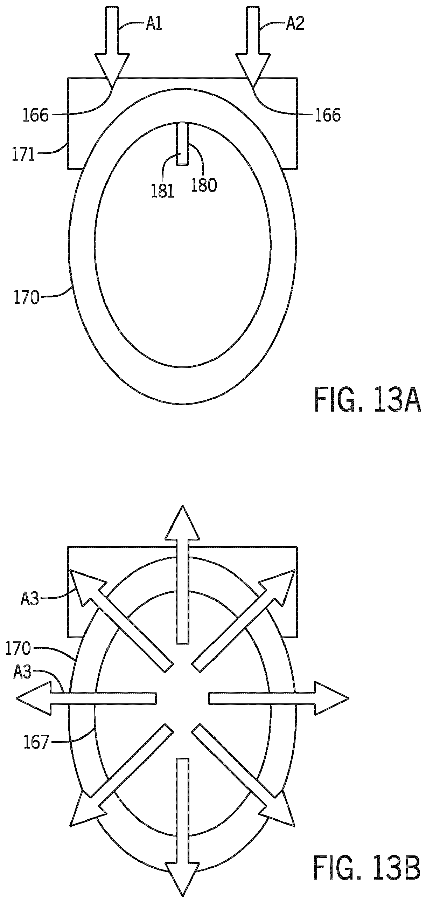

At act S207, the base is placed in a second mold. At act S209, a top layer 166 (e.g., thermally conductive material) is over molded over the thin film heater 165 and the base 161 using the second mold. FIG. 13A illustrates a first example where the thermally conductive polypropylene is injected through one or more openings as shown by arrows A2 at the hinge assembly 171 of the toilet seat 170. FIG. 13B illustrates a second example where the polypropylene is injected through one or more openings 167 on the interior surface of the toilet seat 170. As shown, eight openings 167 are used to inject the material from the inside of the toilet seat 170 as shown by arrow A3. In this way, the material travels in a radial direction from the center towards the outside of the toilet seat 170.

As shown in FIG. 12B, the material (e.g., polypropylene) travels over the base 161 and the film heater 165 along arrows A1. Portions of the top layer 166 form around the first lip 162 and the second lip 163 such that the top layer 166 includes indention 172 corresponding to the first lip 162 and protrusion 173 corresponding to the second lip 173. The first lip 162 prevents the injected material from directly contacting the edge of the film heater 165, which could case the film heater 165 to peel up from the base 161. The first lip 162 may also prevent the injected material from otherwise damaging the film heater 165. The second lip 163 may also help to secure the film heater 165 between the base 161 and the top layer 166.

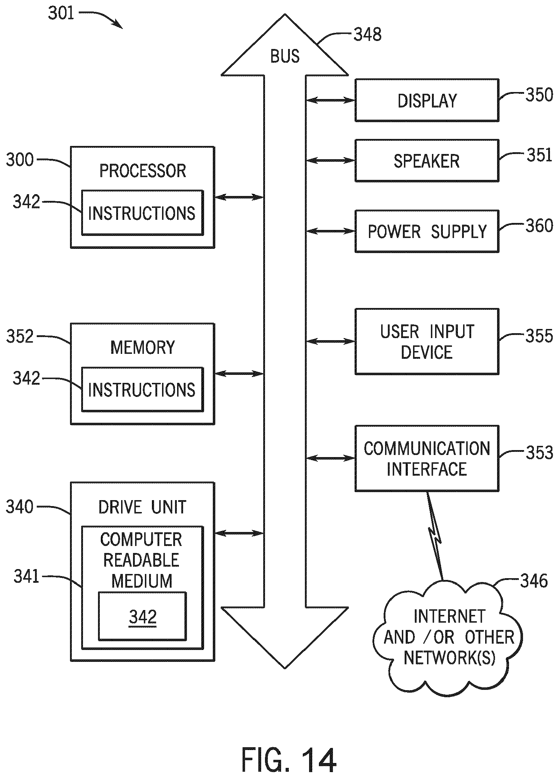

FIG. 14 illustrates an example control system or controller 301 for any of the embodiments described herein. The controller 102 may include a processor 300, a memory 352, and a communication interface 353 for interfacing with devices or to the internet and/or other networks 346. In addition to the communication interface 353, a sensor interface may be configured to receive data from the sensors described herein or data from any source. The controller 102 may include an integrated display 350 (projector), speaker 351, or other output devices. The components of the control system may communicate using bus 348. The control system may be connected to a workstation or another external device (e.g., control panel) and/or a database for receiving user inputs, system characteristics, and any of the values described herein.

As shown in FIG. 13A, the toilet may also include a bidet 180 having a heater 181. The heater 181 may be an in-line heater along the water path through the bidet 180. The water dispensed by the bidet 180 may travel through the heater 181. The controller 301 (e.g., processor 300) may provide a current or commands to the heater 181 and the film heater 165. The controller 301 may provided a current that energizes the heaters or provide a PWM command having a predetermined duty cycle corresponding to a target temperature. Other feedback systems and temperature targeting techniques.

In one example, the controller 301 (e.g., processor 300) may energize or send commands to heater 181 and heater 165 is alternating time periods. That is, for any given time, the controller 301 does not energize both the heater 181 and the heater 165.

The controller 301 may energize the heater 165 in response to any of the occupancy sensors described herein (e.g., image sensor, proximity sensor, pressure sensor). When the bidet 180 is activated, the controller 301 stops energizing or sending commands to heater 165 and begins to energize or send commands to the heater 181. In this way, the total power or wattage consumed by the combination of heater 181 and heater 165 will not exceed a predetermined power threshold. The controller 301 may energize heater 165 for six seconds before a user input is effective to active the bidet 180 and energize heater 181.

In one implementation, the controller 301 may alternate between the heater 165 and the heater 181 so that both provide heat. For example, the controller 301 may energize heater 165 for one second and subsequently energize heater 181 for one second. The process may then repeat, such that the controller 301 again energizes heater 165 for one second and again subsequently energizes heater 181 for one second.

Optionally, the control system may include an input device 355 and/or a sensing circuit 356 in communication with any of the sensors. The sensing circuit receives sensor measurements from sensors as described above. The input device may include any of the user inputs such as buttons, touchscreen, a keyboard, a microphone for voice inputs, a camera for gesture inputs, and/or another mechanism.

Optionally, the control system may include a drive unit 340 for receiving and reading non-transitory computer media 341 having instructions 342. Additional, different, or fewer components may be included. The processor 300 is configured to perform instructions 342 stored in memory 352 for executing the algorithms described herein. A display 350 may be an indicator or other screen output device. The display 350 may be combined with the user input device 355.

Processor 300 may be a general purpose or specific purpose processor, an application specific integrated circuit (ASIC), one or more programmable logic controllers (PLCs), one or more field programmable gate arrays (FPGAs), a group of processing components, or other suitable processing components. Processor 300 is configured to execute computer code or instructions stored in memory 352 or received from other computer readable media (e.g., embedded flash memory, local hard disk storage, local ROM, network storage, a remote server, etc.). The processor 300 may be a single device or combinations of devices, such as associated with a network, distributed processing, or cloud computing.

Memory 352 may include one or more devices (e.g., memory units, memory devices, storage devices, etc.) for storing data and/or computer code for completing and/or facilitating the various processes described in the present disclosure. Memory 352 may include random access memory (RAM), read-only memory (ROM), hard drive storage, temporary storage, non-volatile memory, flash memory, optical memory, or any other suitable memory for storing software objects and/or computer instructions. Memory 352 may include database components, object code components, script components, or any other type of information structure for supporting the various activities and information structures described in the present disclosure. Memory 352 may be communicably connected to processor 300 via a processing circuit and may include computer code for executing (e.g., by processor 300) one or more processes described herein. For example, the memory 352 may include graphics, web pages, HTML files, XML files, script code, shower configuration files, or other resources for use in generating graphical user interfaces for display and/or for use in interpreting user interface inputs to make command, control, or communication decisions.

In addition to ingress ports and egress ports, the communication interface 353 may include any operable connection. An operable connection may be one in which signals, physical communications, and/or logical communications may be sent and/or received. An operable connection may include a physical interface, an electrical interface, and/or a data interface. The communication interface 353 may be connected to a network. The network may include wired networks (e.g., Ethernet), wireless networks, or combinations thereof. The wireless network may be a cellular telephone network, an 802.11, 802.16, 802.20, or WiMax network, a Bluetooth pairing of devices, or a Bluetooth mesh network. Further, the network may be a public network, such as the Internet, a private network, such as an intranet, or combinations thereof, and may utilize a variety of networking protocols now available or later developed including, but not limited to TCP/IP based networking protocols.

While the computer-readable medium (e.g., memory 352) is shown to be a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the methods or operations disclosed herein.

In a particular non-limiting, exemplary embodiment, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored. The computer-readable medium may be non-transitory, which includes all tangible computer-readable media.

In an alternative embodiment, dedicated hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

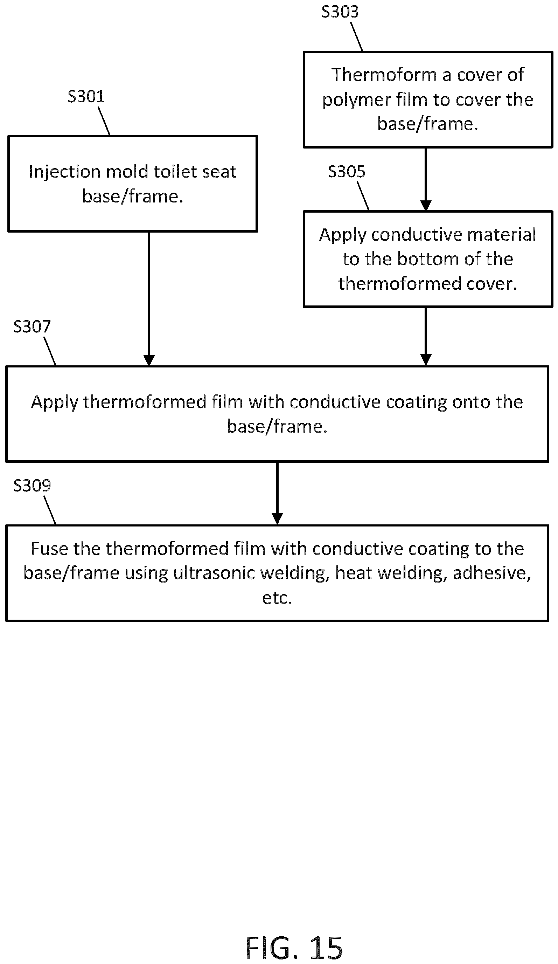

Figure 15 illustrates another example flowchart for manufacturing an example toilet seat such as toilet seat 100 in FIG. 3A. The toilet seat of this example may have the same visual appearance of that of FIG. 3A but be manufacturing according to a different technique as described below. Additional, different or fewer acts may be included.

At act S301, injection molding a toilet seat base. For example, pellets or other plastic material is melted in an injection machine and then injected into a mold of the toilet seat. As the plastic cools, it solidifies into the shape of the toilet seat. The toilet seat is ejected from the mold.

At act S303, thermoforming a cover of polymer film. The polymer film may be a plastic sheet. The polymer film may be heated using a mold to form it into the shape of the toilet seat base.

At act S305, applying a conductive coating to a surface of the thermoformed cover. The conductive coating may include carbon nano-tubes, metal wire mesh, electrically conductive paint, or other examples such as the examples described herein.

At act S307, the thermoformed film with the conductive coating is applied to the toilet seat base. For example, the thermoformed film with the conductive coating may be fused to the toilet seat base. Fusing may include ultrasonic welding or heat welding.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. A toilet seat assembly comprising:
a toilet seat;
a thin film heater adhered to a top surface of the toilet seat; and
a coating of injected molded material on a surface of the thin film heater.

2. The toilet seat assembly of claim 1, further comprising:
a first terminal coupled to the thin film heater; and
a second terminal coupled to the thin film heater.

3. The toilet seat assembly of claim 2, further comprising:
a power source electrically coupled to the first terminal and the second terminal.

4. The toilet seat assembly of claim 3, further comprising:
a controller configured to set a duty cycle for the power source.

5. The toilet seat assembly of claim 4, further comprising:
a temperature sensor configured to detect a temperature of the toilet seat and provide the temperature to the controller, wherein the duty cycle for the power source is selected according to the detected temperature.

6. The toilet seat assembly of claim 5, wherein the controller is configured to compare the detected temperature to a target temperature and the duty cycle is selected in response to the comparison, optionally wherein the toilet seat assembly further comprises a user input device configured to receive a selection of the target temperature.

7. The toilet seat assembly of claim 4, claim 5 or claim 6, further comprising:
an occupancy sensor configured to detect a presence of a user, wherein the controller connects the power source and the first terminal and the second terminal in response to the presence of the user;
optionally wherein the occupancy sensor includes a presence sensor, a pressure sensor, a capacitance sensor, an image sensor or a proximity sensor.

8. The toilet seat assembly of any one of claims 4 to 7, further comprising:
a bidet heater, wherein the controller is configured to energize the thin film heater in a first time period and energize the bidet heater in a second time period.

9. The toilet seat assembly of any one of the preceding claims, further comprising:
a bidet including a water passage;
a bidet heater coupled to the water passage; and
a controller configured to energize the bidet heater and the thin film heater.

10. A method of manufacturing a toilet seat assembly, the method comprising:
injection molding a toilet seat;
adhering a thin film heater to a top surface of the toilet seat; and
overmolding a thermally conductive material over the thin film heater.

11. The method of claim 10, wherein the thermally conductive material is injected in a radial direction of the toilet seat and/or wherein the thermally conductive material is injected through a plurality of openings on an interior surface of the toilet seat.

12. A toilet seat assembly comprising:
a toilet seat frame; and
an electrically conductive polymer heater supported by the toilet seat frame, wherein the electrically conductive polymer heater includes carbon fiber and polypropylene.

13. A method comprising:
injection molding a toilet seat base;
thermoforming a cover of polymer film;
applying a conductive coating to a surface of the thermoformed cover; and
applying the thermoformed film with the conductive coating to the toilet seat base.

14. The method of claim 17, further comprising:
fusing the toilet seat base and the thermoformed film with the conductive coating;
optionally fusing the toilet seat base and the thermoformed film with the conductive coating comprises ultrasonic welding or heat welding.

15. The method of claim 13 or claim 14, wherein applying the thermoformed film with the conductive coating comprises applying adhesive.
